# EUROPÄISCHE PATENTSCHRIFT

(11) **EP 1 629 739 B1**
(45) Veröffentlichungstag und Bekanntmachung des Hinweises auf die Patenterteilung: **27.07.2011**
(21) Anmeldenummer: 05090237.8
(22) Anmeldetag: 18.08.2005
(51) Int. Cl.: A44B 11/00, B60R 22/18

(54) **Befestigungseinrichtung für einen Sicherheitsgurt**
Fastening device for safety belt
Dispositif de fixation pour ceinture de sécurité

(30) Priorität: 24.08.2004 DE 102004041109
(43) Veröffentlichungstag der Anmeldung: 01.03.2006
(73) Patentinhaber: TAKATA - PETRI AG, 63743 Aschaffenburg (DE)
(72) Erfinder: Rothkugel, Armin, 89075 Ulm (DE)
(74) Vertreter: Baumgärtel, Gunnar

(56) Entgegenhaltungen:
- WO-A-97/02767
- DE-A1- 3 135 456
- DE-U1- 29 515 686

## Beschreibung

Die Erfindung bezieht sich auf ein Endbeschlagsschloss für einen Kraftfahrzeugsicherheitsgurt, mit den Merkmalen gemäß dem Oberbegriff des Anspruchs 1.

Ein Endbeschlagschloss mit den Merkmalen des Oberbegriffs des Anspruchs 1 ist in der deutschen Offenlegungsschrift DE 31 35 456 A1 beschrieben. Bei diesem Endbeschlagschloss wird ein Steckelement in einer Aufnahmeeinrichtung mittels einer Sicherungsnase der Aufnahmeeinrichtung verriegelt.

Ein anderes Endbeschlagsschloss ist aus der deutschen Gebrauchsmusterschrift DE 201 16 939 U1 bekannt. Mit diesem Endbeschlagsschloss wird ein Ende eines Sicherheitsgurtes an einem Fahrzeugchassis dauerhaft befestigt. Das vorbekannte Endbeschlagsschloss weist eine Aufnahmeeinrichtung auf, in die zwecks Befestigung des Sicherheitsgurtes ein Steckelement eingeführt und darin arretiert wird. Zur Arretierung des Steckelements ist in der Aufnahmeinrichtung eine Verriegelungseinrichtung vorgesehen, mit der das eingeführte Steckelement dauerhaft verriegelt wird. Bei dem vorbekannten Endbeschlagsschloss enthält die Verriegelungseinrichtung eine scherenförmige Vorrichtung, die mit einer separaten Feder unter einer Vorspannung gehalten wird.

Der Erfindung liegt die Aufgabe zugrunde, ein Endbeschlagsschloss anzugeben, das sich besonders einfach fertigen lässt und somit nur minimale Herstellungskosten hervorruft.

Diese Aufgabe wird ausgehend von einem Endbeschlagsschloss der eingangs beschriebenen Art erfindungsgemäß durch das kennzeichnende Merkmal des Anspruchs 1 gelöst. Vorteilhafte Ausgestaltungen des erfindungsgemäßen Endbeschlagsschlosses sind in Unteransprüchen angegeben.

Danach ist erfindungsgemäß vorgesehen, dass die Verriegelungseinrichtung ausschließlich durch eine einteilige Verschlussfeder gebildet ist, die als separates Element in der oder an der Aufnahmeeinrichtung befestigt ist.

Ein wesentlicher Vorteil des erfindungsgemäßen Endbeschlagsschlosses besteht darin, dass diese mit sehr wenigen Elementen auskommt und sich somit sehr einfach und kostengünstig fertigen lässt, weil nämlich die Verriegelungseinrichtung zum Verriegeln des Steckelements einteilig ausgeführt ist. Im Gegensatz zu der eingangs beschriebenen vorbekannten Befestigungseinrichtung, bei der die Verriegelungseinrichtung durch insgesamt drei Teile, nämlich die zwei Bestandteile der scherenförmigen Vorrichtung sowie die separate Feder gebildet ist, ist bei dem erfindungsgemäßen Endbeschlagsschloss hierfür ausschließlich ein einziges Element vorgesehen. Die Herstellungskosten sind somit bei dem erfindungsgemäßen Endbeschlagsschloss deutlich reduziert.

Als vorteilhaft wird es angesehen, wenn auch die Aufnahmeeinrichtung einteilig ausgeführt ist. Bei einer einteiligen Ausgestaltung der Aufnahmeeinrichtung werden nämlich die Herstellungskosten noch weiter reduziert. Im Ergebnis weist das Endbeschlagsschloss somit vorzugsweise ausschließlich zwei Teile auf, nämlich die einteilige Aufnahmeeinrichtung sowie die einteilige Verschlussfeder.

Besonders einfach und damit vorteilhaft lässt sich die einteilige Verschlussfeder durch ein Federblech bilden, das bei Einfügen des Steckelements auseinander gebogen wird.

Die Aufnahmeeinrichtung wird vorzugsweise durch ein einteiliges Stanzbiegeteil gebildet, da sich ein Stanzbiegeteil sehr kostengünstig fertigen lässt.

Das Endbeschlagsschloss wird bevorzugt zur dauerhaften Befestigung eines Endes eines Sicherheitsgurtes am Fahrzeugchassis eines Fahrzeugs verwendet. Hierbei kann das Steckelement an einem Ende des Sicherheitsgurtes und das Endbeschlagsschloss mittelbar oder unmittelbar am Fahrzeugchassis befestigt werden. Dabei kann beispielsweise zusätzlich zwischen dem Endbeschlagsschloss und dem Fahrzeugchassis ein Endbeschlagsstraffer angeordnet werden, mit dem im Falle eines Unfalls der Sicherheitsgurt gestrafft wird.

Gemäß einer alternativen Ausgestaltung des Endbeschlagsschlosses ist vorgesehen, dass das Endbeschlagsschloss am Sicherheitsgurt und das Steckelement mittelbar oder unmittelbar am Fahrzeugchassis befestigt ist. Bei dieser Ausgestaltung ist ein Endbeschlagsstraffer vorzugsweise zwischen dem Steckelement und dem Fahrzeugchassis vorgesehen.

Besonders bevorzugt handelt es sich bei der Verschlussfeder um eine im Querschnitt U-förmige Feder, deren Bodenbereich einen Anschlag für das Steckelement bildet und dessen zwei Seitenbereiche jeweils eine Ausnehmung aufweisen, in die Rastelemente des Steckelements zum Verriegeln einrasten. Bevorzugt weist das Steckelement einen nasenförmigen Nocken auf, der in verriegelter Stellung des Steckelements auf dem Bodenbereich der U-förmigen Verschlussfeder aufliegt und diesen vorzugsweise in Richtung Boden derart drückt, dass die zwei Seitenbereiche der U-förmigen Verschlussfeder gegen Seitenflanken des Steckelements gepresst werden. Die Funktion des nasenförmigen Nocken besteht somit darin, eine besonders feste Verriegelung des Steckelementes zu bewirken, in dem die die Verrastung herbeiführenden Seitenbereiche der Verschlussfeder nach einer Verriegelung sicher und dauerhaft gegen die Seitenflanken des Steckelements gepresst werden. Ein unbeabsichtigtes Lösen des Steckelements aus der Aufnahmeeinrichtung wird somit zuverlässig vermieden.

Zur Verriegelung bzw. Verrastung des Steckelements in der Aufnahmeeinrichtung weist das Steckelement vorzugsweise Rastelemente auf, die jeweils durch sägezahnförmig verlaufende Seitenflankenbereiche mit sich anschließender Rastausnehmung gebildet sind. Die Rastausnehmung wird bevorzugt durch zwei im Wesentlichen parallel zueinander und senkrecht zu den Seitenflanken des Steckelements verlaufende Rastkanten gebildet. Der Rastboden der Rastausnehmungen verläuft dabei vorzugsweise jeweils im Wesentlichen senkrecht zu den zwei zugeordneten parallelen Rastkanten und damit parallel zur Einsteckrichtung des Steckelements.

Die U-förmige Verschlussfeder wird besonders bevorzugt zwischen mindestens einem U-förmigen Trägerelement und einem im Wesentlichen senkrecht zur Einschubrichtung des Steckelements abgebogenen Trägerelement an der bzw. in der Aufnahmeeinrichtung eingeklemmt. Hierdurch lassen sich die Herstellungskosten bei der Montage der Verschlussfeder in der Aufnahmeeinrichtung in vorteilhafter Weise sehr gering halten, da neben dem "Einklemmen" der Verschlussfeder keine weiteren Befestigungsschritte erforderlich sind.

Die Querschnittsebene, in der das U-förmige Trägerelement U-förmig verläuft, ist vorzugsweise senkrecht zum Bodenbereich der U-förmigen Verschlussfeder angeordnet. Bevorzugt ist das Endbeschlagsschloss derart ausgestaltet, dass ein Lösen der Verriegelung des Steckelements von außen nur mit Hilfe eines Werkzeugs möglich ist. Ein unbeabsichtigtes Lösen des Sicherheitsgurts wird somit zuverlässig vermieden.

Im Übrigen ist es möglich, das Endbeschlagsschloss in einem separaten Gehäuse unterzubringen; der Zugang zu der Verschlussfeder - beispielsweise zum Lösen der Verschlussfeder - erfolgt dann vorzugsweise über zumindest ein Öffnungsloch im Gehäuse.

Die Erfindung wird nun nachfolgend anhand eines Ausführungsbeispiels erläutert. Dabei zeigen:
- Figur 1: das Ausführungsbeispiel des Endbeschlagsschlosses sowie ein dazu passendes Steckelement vor dessen Einführen in die Befestigungseinrichtung,
- Figur 2: das in das Endbeschlagsschloss eingeführte Steckelement nach dessen Verriegelung,
- Figur 3: eine Sicht von schräg oben auf das Endbeschlagsschloss, bevor das Steckelement eingeführt worden ist, und
- Figuren 4 und 5: die Befestigung einer Verschlussfeder des Endbeschlagsschlosses an einer Aufnahmeinrichtung des Endbeschlagsschlosses im Detail.

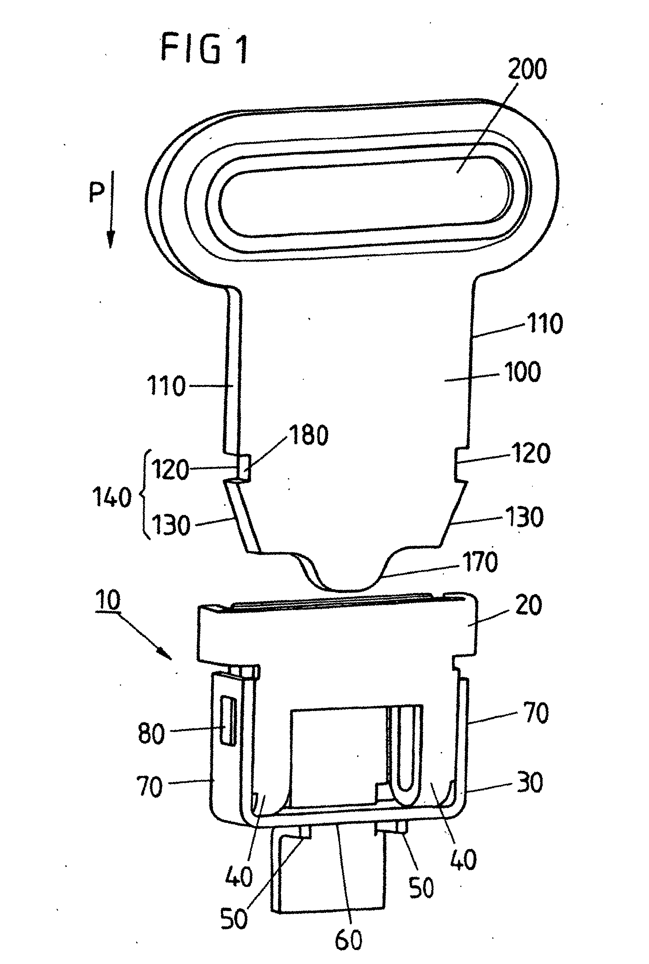

In der Figur 1 erkennt man ein Endbeschlagsschloss 10, das zur dauerhaften Befestigung eines Endes eines in der Figur 1 aus Gründen der Übersichtlichkeit nicht dargestellten Sicherheitsgurtes an einem Fahrzeugchassis eines Fahrzeugs dient. Das Endbeschlagsschloss 10 weist eine Aufnahmeeinrichtung 20 auf, die durch ein einteiliges Stanzbiegeteil gebildet ist. An der Aufnahmeeinrichtung 20 ist eine im Querschnitt U-förmige Verschlussfeder 30 angeklemmt, die durch ein Federblech gebildet ist.

Zur Befestigung der Verschlussfeder 30 an der Aufnahmeeinrichtung 20 weist die Aufnahmeeinrichtung 20 im Querschnitt U-förmige Trägerelemente 40 auf, denen jeweils ein abgewinkeltes Trägerelement 50 zugeordnet ist. Ein Bodenbereich 60 der U-förmigen Verschlussfeder 30 ist zwischen die zwei U-förmigen Trägerelemente 40 und die zwei abgewinkelten Trägerelemente 50 festgeklemmt.

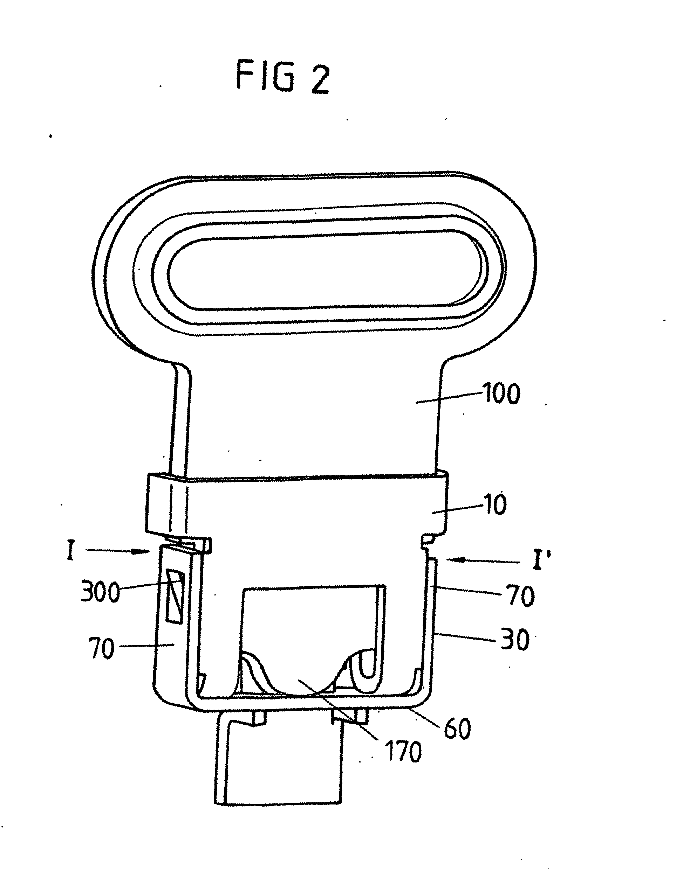

Wie sich in der Figur 1 ebenfalls erkennen lässt, weisen die beiden parallel verlaufenden Seitenbereiche 70 der U-förmigen Verschlussfeder 30 jeweils eine Ausnehmung 80 auf, mit denen ein in die Aufnahmeeinrichtung 20 eingefügtes Steckelement 100 verriegelt wird. Das Steckelement 100 ist mit zwei parallel angeordneten Seitenflanken 110 ausgestattet, an die sich jeweils eine Rastausnehmung 120 und ein sägeförmiger Seitenflankenbereich 130 anschließt. Die Rastausnehmungen 120 sowie die sägeförmigen Seitenflankenbereiche 130 bilden jeweils steckelementseitige Rastelemente 140, die mit den beiden Ausnehmungen 80 der Verschlussfeder 30 zusammenwirken. Dieses Zusammenwirken wird im Zusammenhang mit den Figuren 2 bis 5 nachfolgend noch im Detail erläutert. An dieser Stelle sei jedoch bereits erwähnt, dass die beiden Rastausnehmungen 120 unterschiedlich groß sein können, so dass sich das Steckelement 100 ausschließlich in einer vorgegebenen relativen Lage in der Aufnahmeeinrichtung 20 verriegeln lässt. Es wird somit eine Poka-Joke-Sicherung, also eine Verdrehsicherung, realisiert, die ein unerwünschtes Verdrehen des Sicherheitsgurtes um 180 Grad verhindert; die Ausnehmungen 80 der Verschlussfeder 30 werden hierzu entsprechend dimensioniert, beispielsweise ist eine der beiden Ausnehmungen 80 kleiner als die andere oder aber an einer anderen Stelle als die andere angeordnet.

Wie sich in der Figur 1 darüber hinaus erkennen lässt, ist das Steckelement 100 mit einem nasenförmigen Nocken 170 bestückt, der in Einschubrichtung P vorn angeordnet ist. Bei einem Einschieben des Steckelements 100 werden die beiden Seitenbereiche 70 der U-förmigen Verschlussfeder 30 durch die sägeförmigen Seitenflankenbereiche 130 auseinander gedrückt, bis schließlich das Steckelement 100 in den Ausnehmungen 80 vollständig einrastet.

Zur Befestigung des Sicherheitsgurtes am Fahrzeugchassis wird der Sicherheitsgurt an einem im Querschnitt ovalen Befestigungsbereich 200 des Steckelementes 100 befestigt. Das Endbeschlagsschloss 10 wird mittelbar oder unmittelbar am Fahrzeugchassis angebracht.

In der Figur 2 ist die Anordnung bestehend aus dem Steckelement 100 und dem Endbeschlagsschloss 10 dargestellt, nachdem das Steckelement 100 vollständig in das Endbeschlagsschloss 10 eingeführt und in diesem verriegelt wurde. Man erkennt, dass der nasenförmige Nocken 170 des Steckelements 100 auf dem Bodenbereich 60 der U-förmigen Verschlussfeder 30 aufliegt und diesen in Pfeilrichtung P nach unten drückt, so dass die Seitenbereiche 70 der U-förmigen Verschlussfeder 30 nach innen in Pfeilrichtung l bzw. l' gedrückt werden.

Darüber hinaus lässt sich in der Figur 2 erkennen, dass die durch die Rastausnehmungen 120 und die sägezahnförmigen Seitenflankenbereiche 130 gebildeten Rastelemente 140 in die Ausnehmungen 80 im Seitenbereich 70 der U-förmigen Verschlussfeder 30 eingerastet sind. Hierzu liegen die dem sägeförmigen Seitenflankenbereich 130 zugewandten Rastkanten 300 der Rastausnehmungen 120 unmittelbar am Randbereich der Ausnehmung 80 der U-förmigen Verschlussfeder 30 an. Das Steckelement 100 ist somit fest an der Verschlussfeder 30 und damit in der Aufnahmeeinrichtung 20 verrastet.

Es lässt sich in der Figur 2 darüber hinaus erkennen, dass durch den nasenförmigen Nocken 170 die U-förmige Verschlussfeder 130 ebenfalls an der Aufnahmeeinrichtung 20 besonders fest fixiert wird, da nämlich durch den Druck des nasenförmigen Nocken 170 auf den Bodenbereich 60 der Verschlussfeder 30 der Bodenbereich 60 besonders fest zwischen den U-förmigen Trägerelementen 40 und den abgewinkelten Trägerelementen 50 der Aufnahmeeinrichtung 20 verklemmt wird.

Die Rastausnehmungen 120 weisen im Übrigen jeweils einen Rastboden 180 auf, der senkrecht zu den zwei parallelen Rastkanten 300 und parallel zur Einschubrichtung P des Steckelements 100 verläuft.

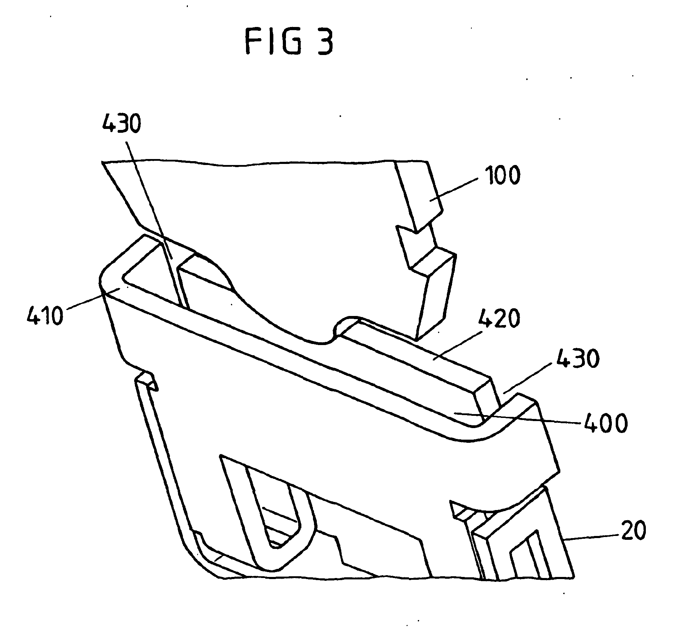

In der Figur 3 ist das Endbeschlagsschloss 10 sowie das Steckelement 100 nochmals von einer Sicht von schräg oben gezeigt, bevor das Steckelement 100 in die Aufnahmeeinrichtung 20 eingeführt wird. Man erkennt hierbei, dass der Aufnahmebereich 400 der Aufnahmeeinrichtung 20 durch zwei Aufnahmeteilelemente 410 und 420 begrenzt wird. Der eine der zwei Aufnahmeteilelemente 410 ist dabei im Querschnitt U-förmig. Der andere der beiden Aufnahmeteilelemente 420 wird durch einen Quersteg gebildet, der dem Bodenbereich des U-förmigen Aufnahmeteilelements 410 parallel gegenüber liegt und somit den im Querschnitt rechteckförmigen Aufnahmebereich 400 bildet. Die beiden Aufnahmeteilelemente 410 und 420 sind dabei durch zwei Schlitze 430 voneinander getrennt. Diese beiden Schlitze 430 sind herstellungsbedingt vorhanden, da - wie oben eingehend erläutert - die Aufnahmeinrichtung 20 durch ein einteiliges Stanzbiegeteil gebildet ist.

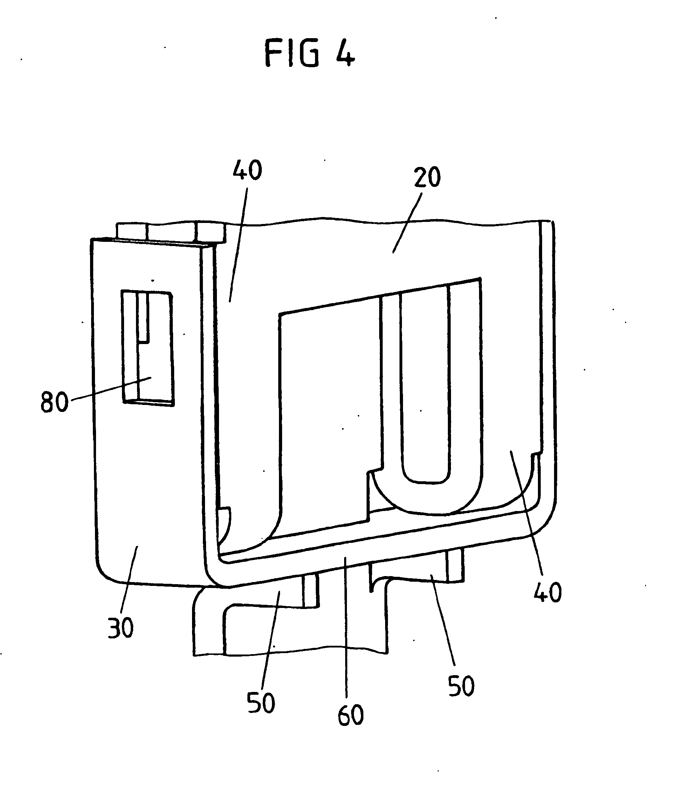

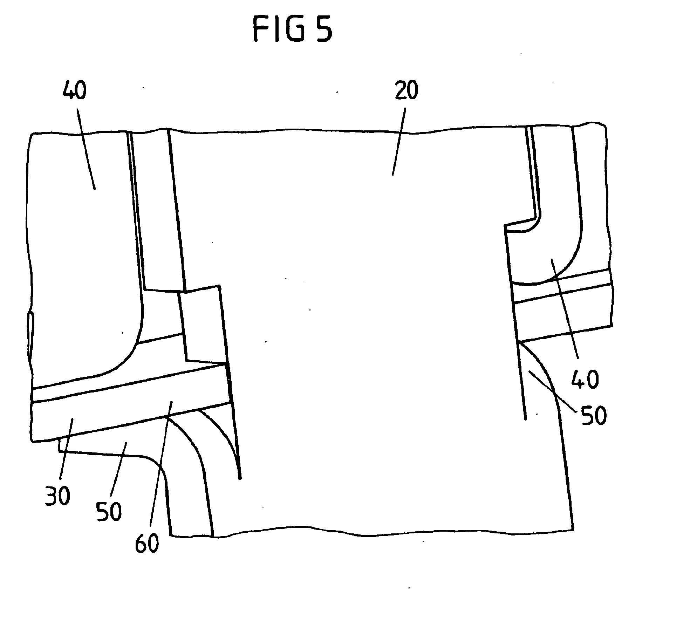

In den Figuren 4 und 5 ist die Befestigung der Verschlussfeder 30 an der Aufnahmeeinrichtung 20 nochmals im Detail dargestellt. Man erkennt, dass der Bodenbereich 60 der U-förmigen Verschlussfeder 30 zwischen den beiden abgewinkelten Trägerelementen 50 und den beiden U-förmigen Trägerelementen 40 festgeklemmt ist. Zur Montage der Verschlussfeder 30 an der Aufnahmeeinrichtung 20 muss diese somit lediglich zwischen die beiden U-förmigen Trägerelemente 40 und die beiden abgewinkelten Trägerelemente 50 eingeschoben werden; ein Festklemmen der Verschlussfeder 30 an der Aufnahmeinrichtung 20 erfolgt dabei automatisch.

Bei dem Ausführungsbeispiel gemäß den Figuren 1 bis 5 ist der Sicherheitsgurt am Steckelement 100 und die Aufnahmeeinrichtung am Fahrzeugchassis befestigt. Selbstverständlich könnte die Befestigung auch umgekehrt sein, so dass das Endbeschlagsschloss 10 am Sicherheitsgurt und das Steckelement 100 am Fahrzeugchassis befestigt wird.

### Bezugszeichenliste

- 10: Endbeschlagsschloss
- 20: Aufnahmeeinrichtung
- 30: U-förmige Verschlussfeder
- 40: U-förmiges Trägerelement
- 50: Abgewinkeltes Trägerelement
- 60: Bodenbereich
- 70: Seitenbereich
- 80: Ausnehmung
- 100: Steckelement
- 110: Seitenflanken
- 120: Rastausnehmung
- 130: Sägeförmiger Seitenflankenbereich
- 140: Rastelement
- 170: nasenförmiger Nocken
- 200: Ovale Ausnehmung
- 400: Aufnahmebereich
- 410: Aufnahmeteilelement
- 420: Aufnahmeteilelement
- 430: Schlitze

## Patentansprüche

1. Endbeschlagsschloss (10) für einen Kraftfahrzeugsicherheitsgurt, mit einer Aufnahmeeinrichtung (20) zur Aufnahme eines Steckelements (100) und mit einer Verriegelungseinrichtung zur Arretierung des Steckelements (100) in der Aufnahmeeinrichtung (20) zwecks Befestigung eines Endes des Kraftfahrzeugsichemeitsgurtes an einem Fahrzeugchassis,
**dadurch gekennzeichnet, dass**
die Verriegelungseinrichtung ausschließlich durch eine einteilige Verschlussfeder (30) gebildet ist, die als separates Element in oder an der Aufnahmeeinrichtung (20) befestigt ist.

2. Endbeschlagsschloss nach Anspruch 1, **dadurch gekennzeichnet, dass** die Verschlussfeder (30) durch ein Federblech gebildet ist, das bei Einfügen des Steckelements (100) auseinander gebogen wird.

3. Endbeschlagsschloss nach Anspruch 1 oder 2, **dadurch gekennzeichnet, dass** die Aufnahmeeinrichtung (20) durch ein einteiliges Stanzbiegeteil gebildet ist.

4. Endbeschlagsschloss nach einem der vorangehenden Ansprüche, **dadurch gekennzeichnet, dass** das Steckelement (100) an einem Ende des Sicherheitsgurtes und das Endbeschlagsschloss (10) mittelbar oder unmittelbar am Fahrzeugchassis befestigt ist.

5. Endbeschlagsschloss nach Anspruch 4, **dadurch gekennzeichnet, dass** zwischen dem Endbeschlagsschloss (10) und dem Fahrzeugchassis ein Endbeschlagsstraffer vorgesehen ist.

6. Endbeschlagsschloss nach einem der vorangehenden Ansprüche 1 bis 3, **dadurch gekennzeichnet, dass** das Endbeschlagsschloss (10) am Sicherheitsgurt und das Steckelement (100) mittelbar oder unmittelbar am Fahrzeugchassis befestigt ist.

7. Endbeschlagsschloss nach Anspruch 6, **dadurch gekennzeichnet, dass** zwischen dem Steckelement (100) und dem Fahrzeugchassis ein Endbeschlagsstraffer vorgesehen ist.

8. Endbeschlagsschloss nach einem der vorangehenden Ansprüche, **dadurch gekennzeichnet, dass** die Verschlussfeder (30) im Querschnitt U-förmig ausgestaltet ist, dass deren Bodenbereich (60) einen Anschlag für das Steckelement (100) bildet und dass deren zwei Seitenbereiche (70) jeweils eine Ausnehmung (80) aufweisen, in die Rastelemente (140) des Steckelements (100) zum Verriegeln einrasten.

9. Endbeschlagsschloss nach Anspruch 8, **dadurch gekennzeichnet, dass** das Steckelement (100) einen nasenförmigen Nocken (170) aufweist, der in verriegelter Stellung des Steckelements (100) auf dem Bodenbereich (60) der U-förmigen Verschlussfeder (30) aufliegt.

10. Endbeschlagsschloss nach Anspruch 9, **dadurch gekennzeichnet, dass** der nasenförmige Nocken (170) in verriegelter Stellung des Steckelements (100) den Bodenbereich (60) der U-förmigen Verschlussfeder(30)in Richtung Boden derart drückt, dass die zwei Seitenbereiche (70) der Verschlussfeder (30) gegen Seitenflanken (110) des Steckelements (100) gepresst werden.

11. Endbeschlagsschloss nach einem der vorangehenden Ansprüche, **dadurch gekennzeichnet, dass** das Steckelement (100) Rastelemente (140) aufweist und zumindest eines der Rastelemente (140) des Steckelements (100) durch einen sägezahnförmig verlaufenden Seitenflankenbereich (130) und eine sich jeweils daran anschließende Rastausnehmung (120) gebildet ist.

12. Endbeschlagsschloss nach Anspruch 11, **dadurch gekennzeichnet, dass** die Rastausnehmung (120) zwei im Wesentlichen parallel zueinander und jeweils senkrecht zu den Seitenflanken (110) verlaufende Rastkanten (300) aufweist.

13. Endbeschlagsschloss nach Anspruch 12, **dadurch gekennzeichnet, dass** ein Rastboden (180) senkrecht zu den zwei parallelen Rastkanten (300) und parallel zur Einschubrichtung (P) des Steckelements (100) verläuft.

14. Endbeschlagsschloss nach einem der Ansprüche 8 bis 10, **dadurch gekennzeichnet, dass** die U-förmige Verschlussfeder (30) zwischen mindestens einem im Querschnitt U-förmigen Trägerelement (40) und einem diesem zugeordneten, vorzugsweise senkrecht zur Einschubrichtung (P) abgewinkelten Trägerelement (50) eingeklemmt ist.

15. Endbeschlagsschloss nach Anspruch 14, **dadurch gekennzeichnet, dass** die Querschnittsebene, in der das U-förmige Trägerelement (40) U-förmig ist, senkrecht zum Bodenbereich (60) der U-förmigen Verschlussfeder (30) verläuft.

16. Endbeschlagsschloss nach einem der Ansprüche 8 bis 10, **dadurch gekennzeichnet, dass** die Ausnehmungen (80) der Verschlussfeder (30) eine Verdrehsicherung bilden.

17. Endbeschlagsschloss nach Anspruch 16, **dadurch gekennzeichnet, dass** die Verdrehsicherung durch unterschiedliche Größe und/oder Anordnung der Ausnehmungen (80) der Verschlussfeder (30) gebildet ist.

## Claims

1. An end fitting lock (10) for a motor vehicle seat belt, with a receiving device (2) for receiving a plug-in element (100) and with a locking device for retaining the plug-in element (100) in the receiving device (20) for the purpose of securing of one end of the motor vehicle seat belt on a vehicle chassis,
**characterized in that**,
the locking device is formed exclusively by a one-piece closure spring (30) which is secured as an separate element in or on the receiving device (20).

2. The end fitting lock as claimed in claim 1, **characterized in that** the closure spring (30) is formed by a spring plate which is bent apart when the plug-in element (100) is fitted.

3. The end fitting lock as claimed in claim 1 or 2, **characterized in that** the receiving device (20) is formed by a single-part punched and bent part.

4. The end fitting lock as claimed in one of the preceding claims, **characterized in that** the plug-in element (100) is secured at one end of the seat belt and the end fitting lock (10) is secured indirectly or directly on the vehicle chassis.

5. The end fitting lock as claimed in claim 4, **characterized in that** an end fitting tightener is provided between the end fitting lock (10) and the vehicle chassis.

6. The end fitting lock as claimed in one of the preceding claims 1 to 3, **characterized in that** the end fitting lock (10) is secured on the seat belt and the plug-in element (100) is secured indirectly or directly on the vehicle chassis.

7. The end fitting lock as claimed in claim 6, **characterized in that** an end fitting tightener is provided between the plug-in element (100) and the vehicle chassis.

8. The end fitting lock as claimed in one of the preceding claims, **characterized in that** the closure spring (30) is of U-shaped design in cross section, wherein its bottom region (60) forms a stop for the plug-in element (100), and wherein its two side regions (70) each have a recess (80) into which latching elements (140) of the plug-in element (100) latch for locking purposes.

9. The end fitting lock as claimed in claim 8, **characterized in that** the plug-in element (100) has a lug-shaped cam (170) which, in the locked position of the plug-in element (100), rests on the bottom region (60) of the U-shaped closure spring (30).

10. The end fitting lock as claimed in claim 9, **characterized in that** the lug-shaped cam (170), in the locked position of the plug-in element (100), presses the bottom region (60) of the U-shaped closure spring (30) in the direction of the floor in such a manner that the two side regions (70) of the closure spring (30) are pressed against side flanks (110) of the plug-in element (100).

11. The end fitting lock as claimed in one of the preceding claims, **characterized in that** the plug-in element (100) has latching elements (140) and at least one of the latching elements (140) of the plug-in element (100) is formed by a side flank region (130) with a saw tooth profile and a latching recess (120) adjoining it in each case.

12. The end fitting lock as claimed in claim 11, **characterized in that** the latching recess (120) has two latching edges (300) which run essentially parallel to each other and in each case perpendicularly with respect to the side flanks (110).

13. The end fitting lock as claimed in claim 12, **characterized in that** a latching bottom (180) runs perpendicularly with respect to the two parallel latching edges (300) and parallel to the push-in direction (P) of the plug-in element (100).

14. The end fitting lock as claimed in one of the claims 8 to 10, **characterized in that** the U-shaped closure spring (30) is clamped between at least one support element (40), which is U-shaped in cross section, and a support element (50) which is assigned to the latter and is preferably angled perpendicularly with respect to the push-in direction (P).

15. The end fitting lock as claimed in claim 14, **characterized in that** the cross-sectional plane in which the U-shaped support element (40) is U-shaped runs perpendicularly with respect to the bottom region (60) of the U-shaped closure spring (30).

16. The end fitting lock as claimed in one of the claims 8 to 10, **characterized in that** the recesses (80) of the closure spring (30) forms a means of securing against rotation.

17. The end fitting lock as claimed in claim 16, **characterized in that** the means of securing against rotation is formed by a different size and/or arrangement of the recesses (80) of the closure spring (30).

## Revendications

1. Serrure d'armature d'extrémité (10) pour une ceinture de sécurité de véhicule automobile, comprenant un dispositif de réception (20) pour la réception d'un élément enfichable (100) et comprenant un dispositif de verrouillage pour arrêter l'élément enfichable (100) dans le dispositif de réception (20) dans le but de fixer une extrémité de la ceinture de sécurité du véhicule sur un châssis du véhicule,
**caractérisée en ce que**
le dispositif de verrouillage est formé exclusivement par un ressort de fermeture (30) d'une seule pièce, qui est fixé, comme élément séparé, dans ou sur le dispositif de réception (20).

2. Serrure d'armature d'extrémité selon la revendication 1, **caractérisée en ce que** le ressort de fermeture (30) est formé par une tôle-ressort qui est cintrée en écartement lors de l'introduction de l'élément enfichable (100).

3. Serrure d'armature d'extrémité selon la revendication 1 ou 2, **caractérisée en ce que** le dispositif de réception (20) est formé par une pièce poinçonnée-pliée d'un seul tenant.

4. Serrure d'armature d'extrémité selon l'une des revendications précédentes, **caractérisée en ce que** l'élément enfichable (100) est fixé à une extrémité de la ceinture de sécurité et la serrure d'armature d'extrémité (10) est fixée directement ou indirectement sur le châssis du véhicule.

5. Serrure d'armature d'extrémité selon la revendication 4, **caractérisée en ce qu'**un tensionneur d'armature d'extrémité est prévue entre la serrure de ferrure terminale (10) et le châssis du véhicule.

6. Serrure d'armature d'extrémité selon l'une des revendications précédentes 1 à 3, **caractérisée en ce que** la serrure d'armature d'extrémité (10) est fixée sur la ceinture de sécurité, et l'élément enfichable (100) est fixé directement ou indirectement sur le châssis du véhicule.

7. Serrure d'armature d'extrémité selon la revendication 6, **caractérisée en ce qu'**un tensionneur de ferrure terminale est prévu entre l'élément enfichable (100) et le châssis du véhicule.

8. Serrure d'armature d'extrémité selon l'une des revendications précédentes, **caractérisée en ce que** le ressort de fermeture (30) est conçu avec une section en forme de U, **en ce que** la région de son fond (60) forme une butée pour l'élément enfichable (100), et **en ce que** ses deux régions latérales (70) présentent chacune un évidement (80) dans lequel viennent se clipser des éléments de clipsage (140) de l'élément enfichable (100) pour le verrouillage.

9. Serrure d'armature d'extrémité selon la revendication 8, **caractérisée en ce que** l'élément enfichable (100) comprend une came (170) en forme de doigt qui, dans la position verrouillée de l'élément enfichable (100), s'appuie sur la région du fond (60) du ressort de fermeture (30) en forme de U.

10. Serrure d'armature d'extrémité selon la revendication 9, **caractérisée en ce que** la came (170) en forme de doigt, dans la position verrouillée de l'élément enfichable (100), presse la région du fond (60) du ressort de fermeture (30) en forme de U en direction du fond de telle façon que les deux régions latérales (70) du ressort de fermeture (30) sont pressées contre des flancs latéraux (110) de l'élément enfichable (100).

11. Serrure d'armature d'extrémité selon l'une des revendications précédentes, **caractérisée en ce que** l'élément enfichable (100) comprend des éléments de clipsage (140), et l'un au moins des éléments de clipsage (140) de l'élément enfichable (100) est formé par une zone (130) de flanc latérale qui s'étend en forme de dents de scie et par un évidement d'enclenchement (120) respectif qui fait suite à cette zone.

12. Serrure d'armature d'extrémité selon la revendication 11, **caractérisée en ce que** l'évidement d'enclenchement (120) comporte deux arêtes d'enclenchement (300) qui s'étendent essentiellement parallèlement l'une à l'autre et respectivement perpendiculairement aux flancs latéraux (110).

13. Serrure d'armature d'extrémité selon la revendication 12, **caractérisée en ce qu'**un fond d'enclenchement (180) s'étend perpendiculairement aux deux arêtes d'enclenchement parallèles (300) et parallèlement à la direction d'introduction (P) de l'élément enfichable (100).

14. Serrure d'armature d'extrémité selon l'une des revendications 8 à 10, **caractérisée en ce que** le ressort de fermeture (30) en forme de U est coincé entre au moins un élément porteur (40) à section en forme de U, et un élément porteur (50) associé à celui-ci et coudé de préférence perpendiculairement à la direction d'introduction (P).

15. Serrure d'armature d'extrémité selon la revendication 14, **caractérisée en ce que** le plan de coupe dans lequel l'élément porteur en forme de U (40) présente une forme en U s'étend perpendiculairement à la région du fond (60) du ressort de fermeture (30) en forme de U.

16. Serrure d'armature d'extrémité selon l'une des revendications 8 à 10, **caractérisée en ce que** les évidements (80) du ressort de fermeture (30) forment un blocage antirotation.

17. Serrure d'armature d'extrémité selon la revendication 16, **caractérisée en ce que** le blocage antirotation est formé par des tailles différentes et/ou des agencements différents des évidements (80) du ressort de fermeture (30).
